# EUROPÄISCHE PATENTSCHRIFT

(11) **EP 0 687 049 B1**
(45) Veröffentlichungstag und Bekanntmachung des Hinweises auf die Patenterteilung: **10.09.1997**
(21) Anmeldenummer: 95104095.5
(22) Anmeldetag: 20.03.1995
(51) Int. Cl.: H02G 1/12

(54) **Abisoliervorrichtung**
Stripping device
Dispositif à dénuder

(30) Priorität: 08.06.1994 DE 4420050
(43) Veröffentlichungstag der Anmeldung: 13.12.1995
(73) Patentinhaber: Weidmüller Interface GmbH & Co., D-32760 Detmold (DE)
(72) Erfinder: Schmode, Hartmut, D-32825 Blomberg (DE); Wiebe, Ulrich, D-32694 Dörentrup (DE); Herzog, Armin, D-32760 Detmold (DE); Kornfeld, Joachim, D-32602 Vlotho (DE); David, Bernd, D-32756 Detmold (DE); Hetland, Detlev, D-32760 Detmold (DE); Hanning, Günther, D-32750 Detmold (DE); Gernot, Siegmund, D-32760 Detmold (DE); Bornefeld, Thorsten, D-33189 Schlangen (DE)
(74) Vertreter: TER MEER STEINMEISTER & PARTNER GbR

(56) Entgegenhaltungen:
- EP-A- 0 253 528
- DE-A- 2 827 587
- DE-A- 4 026 933
- GB-A- 1 207 346
- GB-A- 2 077 176

## Beschreibung

Die Erfindung betrifft eine Vorrichtung zum Abisolieren von Leiterenden gemäß dem Oberbegriff des Patentanspruchs 1.

Eine derartige Vorrichtung ist bereits aus der DE-PS 28 27 587 bekannt. Diese bekannte Vorrichtung ist als Abisolierzange ausgebildet und weist ein sich im Bereich der einander gegenüberliegenden Enden der Zangenschenkel angeordnetes Paar von Schneid- und Abstreiferklauen auf. Diese Schneid- und Abstreiferklauen bestehen jeweils aus zu einem Paket zusammengefaßten und aus Stahlblech gefertigten Lamellen, von denen jede durch ihre Formgebung in Bewegungsrichtung der Zangenschenkel federnd elastisch ausgebildet ist und einen sich im wesentlichen parallel zum Zangenschenkel erstreckenden Hauptkörper aufweist, der an seinem dem Zangendrehpunkt zugewandten Ende am jeweiligen Zangenschenkel anliegend gelagert ist und gegen diesen um kleine Winkel federnd schwenkbar ist. Der Hauptkörper weist ferner an dem im Bereich des Endes des jeweiligen Zangenschenkels einen sich im wesentlichen senkrecht zum Hauptkörper erstreckenden und mit diesem einstückig ausgebildeten Schneidvorsprung mit einer Schneidkante und auf der dem Schneidvorsprung unmittelbar gegenüberliegenden und dem Zangenschenkel zugewandten Seite ein ebenfalls mit dem Hauptkörper einstückig ausgebildetes und als Anschlag dienendes Auflager auf, wobei aus den Schneidkanten der Lamellen der beiden Pakete gebildete Schneiden in der Ruhestellung bei geschlossenen Zangenschenkeln auf einer Geraden aneinanderliegen.

Wird das abzuisolierende Ende eines Leiters im Zangenmaul eingeklemmt, so werden die Lamellen durch den Leiter mehr oder weniger weit verbogen, wobei sie mit ihren Schneidkanten in die Leiterisolation eindringen. Da alle Lamellen jedoch dieselbe Elastizität aufweisen und entlang der durch die Schneidkanten gebildeten Schneidgeraden die Druckkraft ausgehend vom Zentrum des Leiters radial nach außen abnimmt, besteht die Gefahr, daß die Schneidkanten der außen liegenden Lamellen nicht weit genug in die Leiterisolation eindringen und somit ein schlechtes Abisolierergebnis erhalten wird.

Der Erfindung liegt die Aufgabe zugrunde, die Vorrichtung der eingangs genannten Art so weiter zu bilden, daß Leiter sicherer und sauberer abisoliert werden können.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine Vorrichtung nach der Erfindung zeichnet sich dadurch aus, daß an der Rückseite des Lamellenpakets eine an das Profil des Leiters angepaßte und die Lamellenquerbewegung entsprechend bestimmende Lamellenführungseinrichtung liegt.

Durch diese Lamellenführungseinrichtung werden die Lamellen, die starr oder mehr oder weniger elastisch sein können, so geführt, daß sie bei Druckbeaufschlagung durch den Leiter im Randbereich des Leiters nicht mehr so stark nachgeben können wie Im Zentralbereich des Leiters. Durch die Lamellenführungseinrichtung wird somit praktisch ein zu starkes Wegschwenken bzw. Ausweichen der Lamellen im Randbereich des Leiters verhindert, so daß diese im Randbereich des Leiters liegenden Lamellen stärker in die Leiterisolation eindringen können, was zu einem besseren Abisolierergebnis führt. Weisen die Lamellen eine gewisse Eigenelastizität auf, so können auch Leiter mit einem Profil abisoliert werden, an das die Lamellenführungseinrichtung nicht ganz exakt angepaßt ist. In jedem Fall dringen aber auch hier die jeweils außen liegenden Lamellen mit ihren Schneidkanten besser in die Leiterisolation ein, so daß auch in diesem Fall befriedigendere Ergebnisse möglich sind.

Es liegt im Rahmen der Erfindung, daß beide Abisolierorgane mit derartigen Lamellenpaketen ausgestattet sein können, daß aber auch nur eines der Abisolierorgane ein derartiges Lamellenpaket aufweisen kann, während das andere der Abisolierorgane, z.B. mit einem konventionellen Lamellenpaket ausgestattet ist.

Die genannte Lamellenquerbewegung ist dabei eine in der Ebene der Abisolierorgane bzw. in der Maulebene liegende Bewegung, die auf das Maul zu und von diesem weg erfolgt.

Nach einer sehr vorteilhaften Weiterbildung der Erfindung ist die Lamellenführungseinrichtung verschwenkbar gelagert. Sie kann somit während des Maulschließvorgangs verschwenkt werden, um erst jetzt die Lamellen zu beaufschlagen und deren Lamellenquerbewegung zu begrenzen, so daß die Lamellen nicht permanent einer nicht vom Leiter herrührenden Lamelleneinstellkraft ausgesetzt zu sein brauchen. Dies führt zu einem energieärmeren Ruhezustand der Vorrichtung und damit zu weniger Verschleiß.

Die Lamellenführungseinrichtung kann Teil eines Klemmbackens sein, mit dem z.B. die Lamellenführungseinrichtung einstückig verbunden ist. Die Verschwenkung der Lamellenführungseinrichtung erfolgt dann durch Verschwenkung des Klemmbackens. Ist beispielsweise der Klemmbacken L-förmig ausgebildet und weist er einen langen horizontalen sowie einen kurzen vertikalen Schenkel auf, so kann die Lamellenführungseinrichtung an der freien Stirnseite des langen Schenkels vorhanden sein, beispielsweise in Form eines stirnseitig in den langen Schenkel eingebrachten V's. Kommt das Lamellenpaket auf dem langen Schenkel des Klemmbackens zu liegen, so liegen die einzelnen Lamellen des Lamellenpaketes auf dem durch das V definierten Rand des langen Schenkels auf und werden durch diesen Rand in ihrer Schwenklage voreingestellt. Statt des V's können auch andere Geometrien zum Einsatz kommen, um ein Ausweichen der Lamellen gemäß einer anderen Funktion bzw. anderen Geometrie zu verhindern. Der Klemmbacken ist dabei im Bereich der Lamellenführungseinrichtung, also im Bereich des V's schwenkbar gelagert.

Um bei Verschwenkung des Klemmbackens eine Vertikalstellung seines kurzen Schenkels bzw. Klemmschenkels sicherzustellen, kann der Klemmbacken selbst gelenkig ausgebildet sein, beispielsweise im Verbindungsbereich zwischen kurzem und langem Schenkel.

Möglich ist auch, den Klemmbacken in Maullängsrichtung an verschiedenen und nicht weit voneinander abweichenden Positionen zu positionieren, um auf diese Weise Klemm- und Schneidkräfte noch genauer an vorhandene Gegebenheiten anpassen zu können, beispielsweise an Leiterisolationshärten, und dergleichen. Durch Verschiebung des Klemmbackens In Maullängsrichtung verschiebt sich auch die Lage der Lamellenführungseinrichtung, was dann zu einem unterschiedlichen Ausweichverhalten der einzelnen Lamellen führt und damit zu unterschiedlichen Schneid- bzw. Klemmkräften.

Nach einer weiteren sehr vorteilhaften Ausgestaltung der Erfindung ist das Lamellenpaket in Maullängsrichtung gleitend auf der Lamellenführungseinrichtung verschiebbar, wobei der horizontal liegende Lamellenboden im vorderen Lamellenbereich zur Schneidkante hin angehoben ist. Bewegt sich somit bei verschwenkter Lamellenführungseinrichtung das Lamellenpaket in Maullängsrichtung über die Lamellenführungseinrichtung hinweg, so kann aufgrund des angehobenen Lamellenbodens jede der Lamellen etwas weiter ausweichen und sich somit ein wenig vom Leiter entfernen, wenn von diesem die Isolation abgezogen wird. Hierdurch wird verhindert, daß die Schneidkanten der Lamellen das verbleibende Leiterende beim Abziehen der Isolation zerkratzen.

Vorzugsweise ist das Lamellenpaket in einer Lamellenkassette schwenkbar gelagert, die mit einer in Maullängsrichtung verschiebbaren Zugstange verbunden ist. Diese Zugstange kann durch geeignete Betätigungsmittel angetrieben werden, um die Lamellenkassette In Maullängsrichtung vor und zurück zu bewegen. Dabei kann das andere der beiden Abisolierorgane ebenfalls mit der Zugstange gekoppelt sein, so daß sich auch dieses in Übereinstimmung mit der Bewegung der Lamellenkassette bewegen läßt.

Zwischen diesem anderen Abisolierorgan und der Lamellenkassette ist vorteilhaft eine Druckfeder vorhanden, die die Lamellenkassette gegen Führungsflächen drückt, auf denen sie verschiebbar gelagert ist. Diese Führungsflächen können z.B. am Gehäuse der Vorrichtung vorhanden sein.

Um geeignete Klemm- und Schneidkräfte aufzubringen, ist vorteilhaft an der Rückseite des Klemmbackens, der mit der Lamellenführungseinrichtung versehen ist, eine den Klemmbacken in Richtung zum Maul drückende Feder angeordnet, die z.B. eine in Maullängsrichtung verlaufende und am hinteren Maulende gelagerte Blattfeder sein kann. Der die Lamellenführungseinrichtung aufweisende Klemmbacken ist dabei zwischen feststehenden Gehäuseteilen angeordnet, gegen die der andere Klemmbacken beim Schließen des Mauls gefahren wird.

Befindet sich im Maul ein abzuisolierendes Leiterende, so wird beim Schließen des Mauls der Leiter zwischen den Klemmbacken eingeklemmt, wobei der zwischen den feststehenden Gehäuseteilen angeordnete Klemmbacken nachgibt, und zwar entsprechend der Kraft der unter ihm vorhandenen Feder. Durch diese Verschwenkung des Klemmbackens wird auch die Lamellenführungseinrichtung verschwenkt, wodurch die maximale Auslenkung der Lamellen des Lamellenpaketes bestimmt wird. Nach vollständigem Schließen des Mauls und erfolgter Durchtrennung der Leiterisolation wird dann die Lamellenkassette mit dem Lamellenpaket relativ zum Klemmbacken verschoben, wobei die Lamellen über die Lamellenführungseinrichtung hinweggleiten und sich wieder vom Leiterkern allmählich entfernen. Dabei greifen jedoch nach wie vor die Schneidkanten der Lamellen hinter das abgetrennte Isolationsstück, um dieses vom Leiter abzuziehen. Nach Erreichen der Endstellung sowie nach Abzug der Isolation vom Leiter gelangen die Klemmbacken wieder in ihre Ausgangslage, und das Lamellenpaket wird in seine vorn im Maul liegende Stellung zurückgeführt, ohne von der Lamellenführungseinrichtung beaufschlagt zu werden, so daß jetzt die Lamellen des Lamellenpakets nicht mehr relativ zueinander verstellt bzw. verdreht sind.

Nach einer Ausgestaltung der Erfindung kann die Vorrichtung als eine zwei Handgriffe aufweisende Zange ausgebildet sein, durch die beim Zusammenführen der Handgriffe das Maul geschlossen und die Zugstange zum hinteren Zangenende geführt wird, und umgekehrt. Die Vorrichtung kann aber auch als Standvorrichtung ausgebildet sein, die sich z.B. fest auf einem Tisch montieren läßt. Statt eines mechanischen Antriebs für die Klemmbacken und die Abisolierorgane sowie für den Antrieb der Zugstange kann auch ein elektrischer Antrieb zum Einsatz kommen, beispielsweise ein Elektromotor, oder dergleichen. Er kann netz- oder batteriebetrieben sein.

Die Erfindung wird nachfolgend unter Bezugnahme auf die Zeichnung näher erläutert. Es zeigen:
- **Fig. 1**: eine zangenartig ausgebildete Vorrichtung nach der Erfindung mit teilweise abgenommenem Gehäuse;
- **Fig. 2**: die Zange nach Fig. 1 ohne oberen Klemmbacken und oberes Abisolierorgan;
- **Fig. 3**: eine perspektivische Ansicht einer Lamellenkassette;
- **Fig. 4**: eine perspektivische Ansicht eines Lamellenpakets;
- **Fig. 5**: eine perspektivische Ansicht eines Klemmbackens mit Lamellenführungseinrichtung;
- **Fig. 6**: eine perspektivische Ansicht einer Abisolierzange nach einem weiteren Ausführungsbeispiel der Erfindung;
- **Fig. 7**: eine der Fig. 3 entsprechende Lamellenkassette;
- **Fig. 8**: ein Lamellenpaket für die Lamellenkassette nach Fig. 7;
- **Fig. 9**: ein gelenkig ausgebildeter Klemmbacken mit Lamellenführungseinrichtung;
- **Fig. 9a**: ein weiterer Klemmbacken mit eingelegter Lamellenführungseinrichtung;
- **Fig. 10**: eine Seitenansicht der Zange nach dem weiteren Ausführungsbeispiel bei geöffnetem Zangenmaul;
- **Fig. 11**: eine Seitenansicht der Zange nach Fig. 10 bei geschlossenem Zangenmaul; und
- **Fig. 12**: eine Seitenansicht der Zange nach Fig. 10 bei geschlossenem Zangenmaul und eingefahrenen bzw. zurückgezogenen Abisolierorganen.

Die Erfindung wird nachfolgend anhand von beispielsweisen Ausführungsformen im einzelnen beschrieben. Dabei ist die Vorrichtung selbst in Form einer Handzange ausgebildet. Wie bereits erwähnt, kann sie aber auch ein Stand- oder Tischgerät sein.

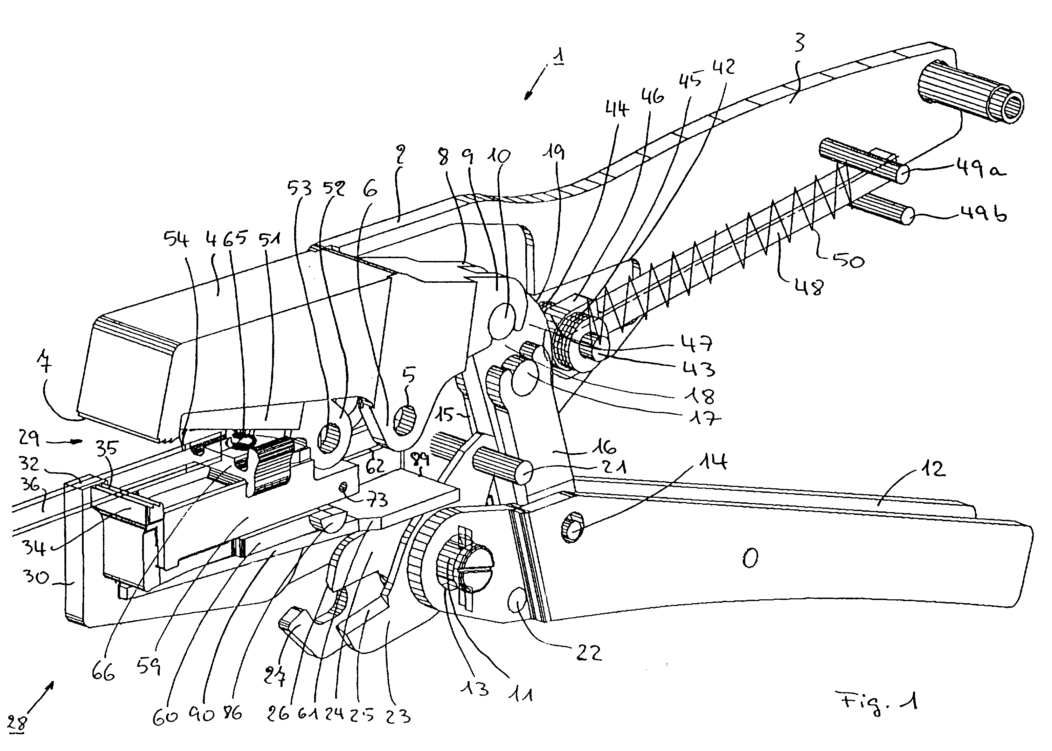

Ein erstes Ausführungsbeispiel einer Handzange ist in den Fig. 1 bis 5 gezeigt.

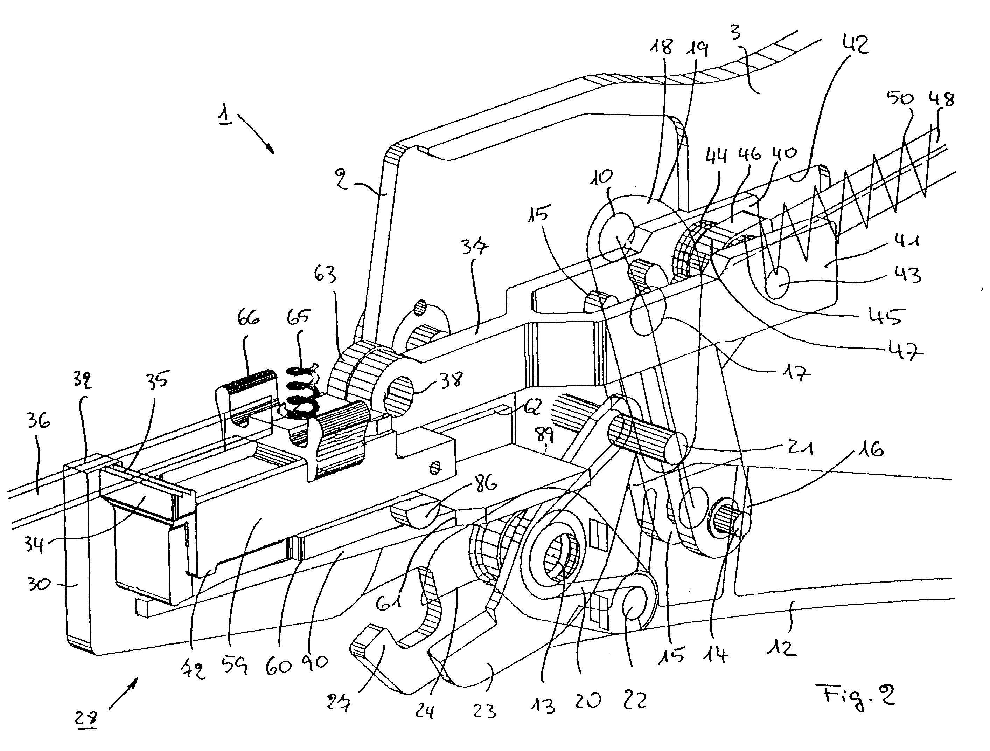

Entsprechend den Fig. 1 und 2 weist die Handzange 1 ein Zangengehäuse 2 auf, mit dem ein gehäusefester Handgriff 3 z.B. einstückig verbunden ist. Gezeigt ist in diesen Figuren nur die hintere Wand des Zangengehäuses 2, wobei natürlich auch noch eine vordere Wand vorhanden ist. Entsprechendes gilt für den gehäusefesten Handgriff 3. Am Zangengehäuse 2 ist ein beweglicher Klemmbacken 4 schwenkbar gelagert, und zwar mittels eines nicht dargestellten Lagerzapfens, der durch Bohrungen 5 im Klemmbacken 4 hindurchragt und in Aufnahmen ruht, die sich an den gegenüberliegenden Innenseiten der Gehäusewände des Zangengehäuses 2 befinden. Die Bohrungen 5 liegen in zwei im Abstand zueinander befindlichen Seitenwänden 6 des Klemmbackens 4, wobei diese Seitenwände 6 an den Innenseiten der Gehäusewände des Zangengehäuses 2 anliegen und von diesem geführt werden. Am vorderen Ende ist der bewegliche Klemmbacken 4 krallenartig ausgebildet und besitzt dort eine Furchen aufweisende Klemmfläche 7. wobei die Furchen parallel zur Zentralachse der Bohrungen 5 verlaufen. Dagegen sind an dem der Klemmfläche 7 gegenüberliegenden Ende des beweglichen Klemmbackens 4 zwei Seitenwandstücke 8 und 9 vorhanden, die im Abstand voneinander angeordnet sind und zur Aufnahme eines Schwenkzapfens 10 dienen, der sich ebenfalls parallel zu den Bohrungen 5 erstreckt. Dabei können die Seitenwandstücke 8 und 9 an ihrer unteren Seite entsprechende Ausnehmungen für den Schwenkzapfen 10 aufweisen, in die dieser klemmend hineingelegt werden kann, so daß die Seitenwandstücke 8 und 9 den Schwenkzapfen 10 klauenartig umgreifen.

Am unteren Zangengehäuse 2 und im Abstand unterhalb der Bohrungen 5 befindet sich ein weiterer Schwenkzapfen 11, der ebenfalls mit beiden Enden in den einander gegenüberliegenden Seitenwänden des Zangengehäuses gelagert ist. Um diesen weiteren Schwenkzapfen 11 ist ein beweglicher Handgriff 12 drehbar. Dabei weist der bewegliche Handgriff 12 an seinem einen Ende eine Bohrung 13 auf, durch die der weitere Schwenkzapfen 11 hindurchragt. Im geringen Abstand vom weiteren Schwenkzapfen 11, und zwar gesehen in Richtung zum hinteren freien Ende des Handgriffs 12, befindet sich im Handgriff 12 ein weiterer Schwenkzapfen 14, auf dem zwei im Abstand voneinander liegende Schiebehebel 15 und 16 schwenkbar gelagert sind. Diese Schiebehebel 15 und 16 sind in Längsrichtung des weiteren Schwenkzapfens 14 versetzt zueinander angeordnet und weisen an ihrem freien Ende krallenartige Ausbildungen auf, in denen ein Schwenkzapfen 17 gelagert ist. Dieser Schwenkzapfen 17 trägt in seinem zentralen Bereich ein Schiebeglied 18, das zwischen den Schiebehebeln 15 und 16 liegt, und auch zwischen den Seitenwandstücken 8 und 9 zu liegen kommt. Dabei durchragt der Schwenkzapfen 10 auch das Schiebeglied 18 in einem vom Schwenkzapfen 17 vorbestimmten Abstand. Mit anderen Worten bilden der weitere Schwenkzapfen 14, die Schiebehebel 15 und 16, der Schwenkzapfen 17, das Schiebeglied 18, der Schwenkzapfen 10 und die Seitenwandstücke 8 und 9 ein Kniehebelgelenk. Das Schiebeglied 18 ist dabei in Richtung zum hinteren Zangenende hin konvex ausgebildet. Es weist hier eine konvex verlaufende Stellfläche 19 auf.

Die Fig. 1 zeigt die Zange im geöffneten Zustand, also in einer Situation, in der die Handgriffe 3 und 12 den größten Abstand voneinander aufweisen. Werden die Handgriffe 3 und 12 auf einander zu bewegt, so bewegt sich der Handgriff 12 im Gegenuhrzeigersinn um den Schwenkzapfen 11 und drückt die Schiebehebel 15 und 16 nach oben in Richtung zum gehäusefesten Handgriff 3. Dabei weicht das Kniehebelgelenk nach hinten in Richtung zum freien Ende des Handgriffs 3 aus, während gleichzeitig das Schiebeglied 18 den beweglichen Klemmbacken 4 um seine die Bohrungen 5 durchsetzende Schwenkachse dreht, und zwar ebenfalls entgegen dem Uhrzeigersinn. Werden die Handgriffe 3 und 12 entlastet, läuft ein umgekehrter Bewegungsvorgang ab. Um den Handgriff 12 in seine Ausgangsstellung zurückzubringen, ist eine Feder 20 vorgesehen, die in Fig. 2 zu erkennen ist. Diese Feder 20 ist um den weiteren Schwenkzapfen herumgewickelt und umgreift einerseits mit ihrem einen Ende einen gehäusefesten Zapfen 21, während sie mit ihrem anderen Ende einen Zapfen 22 umgreift, der am beweglichen Handgriff 12 vorhanden ist, und zwar im Bereich zwischen dem weiteren Schwenkzapfen 11 und dem Schwenkzapfen 14. Werden die Handgriffe 3 und 12 aufeinander zugeführt, wird die Feder 20 gespannt. Bei entlasteten Handgriffen 3 und 12 drückt sie dagegen den Handgriff 12 über den Zapfen 22 Im Uhrzeigersinn um den Schwenkzapfen 11 herum. Diese Bewegung des Handgriffs 12 wird dann durch einen geeigneten Anschlag oder durch die Endstellung des Kniehebelgelenks begrenzt.

Wie die Fig. 1 und 2 weiter erkennen lassen, ist auf dem gehäusefesten Zapfen 21 noch ein feststehendes Messerglied 23 angeordnet. Dagegen ist das andere und den Schwenkzapfen 11 überragende Ende des Handgriffes 12 als weiteres Messerglied 24 ausgebildet, wobei beide Messerglieder 23 und 24 aufeinander zuweisende Schneiden 25 und 26 besitzen, so daß auf diese Weise ein Schneidorgan erhalten wird, das sich schließt, wenn der Handgriff 12 auf den Handgriff 3 zubewegt wird und umgekehrt. Mit dem Bezugszeichen 27 ist ein gehäusefestes Auflager bezeichnet, das zur Positionierung von strangförmigem Gut dient, das mit dein genannten Schneidorgan zerschnitten werden soll.

Die Zange weist einen zweiten bzw. unteren Klemmbacken 28 auf, der später noch im einzelnen beschrieben wird. Zwischen dem oberen bzw. beweglichen Klemmbacken 4 und dem unteren Klemmbacken 28 ist somit ein Zangenmaul 29 vorhanden. An dieser Stelle sei bereits darauf hingewiesen, daß der untere Klemmbacken 28 zwei feststehende Backenwände 30, 31 aufweist, von denen in den Fig. 1 und 2 nur die hintere Backenwand 30 zu erkennen ist. In Fig. 6 sind beide Backenwände 30 und 31 gezeigt. Sie liegen im Abstand parallel zueinander und weisen obere Anschlagflächen 32, 33 auf, gegen die die Klemmfläche 7 des oberen Klemmbackens 4 schlägt, wenn das Zangenmaul 29 geschlossen wird. Zwischen den beiden Backenwänden 30 und 31 liegt ein nach unten nachgiebig gelagertes Klemmelement 34, auf dessen nach oben weisender Klemmfläche 35 ein abzuisolierender Leiter 36 zu liegen kommt, der dann beim Schließend des Zangenmauls 29 zwischen den Klemmflächen 7 und 35 eingeklemmt wird. Hierauf wird weiter unten näher eingegangen.

In der Zange 1 ist ein im wesentlichen horizontal liegendes Zugelement 37 vorhanden, das in Zangenlängsrichtung verschiebbar gelagert ist. Dieses Zugelement 37 ist stangenförmig ausgebildet und besitzt an seinem zum Zangenmaul 29 weisenden Ende eine horizontale Durchgangsbohrung 38 zur Aufnahme des in den Figuren 1 und 2 nicht dargestellten Schwenkzapfens 39. Dieser Schwenkzapfen 39 ist z.B. in Fig. 6 zu erkennen. Dabei ist auch der Schwenkzapfen 39 in Zangenlängsrichtung vor- und zurückbewegbar, also nicht im Zangengehäuse 2 fest gelagert.

In Richtung zum hinteren Zangenende ist das Zugelement gabelförmig ausgebildet und weist dort zwei vertikale und im Abstand voneinder liegende Seitenbügel 40 und 41 auf. Das Zugelement 37 kann z.B. mit den Seitenbügeln 40 und 41 einstückig und aus Metall hergestellt sein. Die Seitenbügel 40, 41 sind in Längsschlitzen geführt, von denen in den Fig. 1 und 2 nur der hintere Längsschlitz 42 für den Seitenbügel 40 zu erkennen ist. Diese Längsschlitze befinden sich in den seitlichen Gehäusewänden des Zangengehäuses 2 und erstrecken sich in horizontaler bzw. Zangen längsrichtung. Sie lassen eine Vor- und Zurückbewegung des Zugelements 37 zu.

Angetrieben wird das Zugelement 37 über das bereits erwähnte Schiebeglied 18, das zwischen den beiden Seitenbügeln 40 und 41 zu liegen kommt. Genauer gesagt erfolgt der Antrieb des Zugelements 37 über die konvexe Stellfläche 19 des Schiebegliedes 18. Zu diesem Zweck befindet sich im Bereich der freien Enden der Schiebebügel 40 und 41 ein horizontaler Lagerzapfen 43, der fest mit den Seitenbügeln 40 und 41 verbunden ist. Sämtliche bisher erwähnten Lager- und Schwenkzapfen liegen parallel zueinander. Auf diesem Lagerzapfen 43 befinden sich zwischen den Seitenbügeln 40und 41 zwei Abstandsscheiben 44 und 45 gleicher Dicke, zwischen denen auf dem Lagerzapfen 43 ein Stellkopf 46 liegt. Dieser Stellkopf 46 ist also schwenkbar auf dem Lagerzapfen 43 angeordnet und weist eine konvexe Stellfläche 47 auf, die in Richtung zum Zangenmaul 29 weist. Diese konvexe Stellfäche 47 steht mit der konvexen Stellfäche 19 des Schiebegliedes 18 in Kontakt. Einstückig mit dem Stellkopf 46 ist eine Stellstange 48 verbunden. Diese Stellstange 48 ist im wesentlichen als gerade Stange ausgebildet und liegt im oberen bzw. gehäusefesten Handgriff 3. Das dem Stellkopf 46 abgewandte Ende der Stellstange 48 ist zwischen zwei Zapfen 49a und 49b geführt, die sich am hinteren Ende des Handgriffes 3 fest positioniert befinden. Ferner liegt auf der Stellstange 48 eine Druckfeder 50, die sich einerseits an den Zapfen 49a und 49b abstützt und andererseits z.B. an einer hinteren Fläche des Stellkopfes 46. Werden die Handgriffe 3 und 12 aufeinander zubewegt und wird dabei über die konvexe Stellfläche 19 und die konvexe Stellfläche 47 die Stellstange 48 nach hinten in Richtung zum freien Ende des Handgriffes 3 gedrückt, so wird die Feder 50 komprimiert bzw. gespannt. Bei Entlastung der Handgriffe 3und 12 drückt dann die Druckfeder 50 das Zugelement 37 wieder in Richtung zum Zangenmaul 29. Während der gesamten Bewegung bleibt die Stellstange 48 durch die Zapfen 49a und 49b geführt.

Im Zangenmaul 29 befindet sich an der unteren Seite des beweglichen Klemmbackens 4 und hinter der Klemmfläche 7 eine Abisolierklaue 51.

Diese Abisolierklaue 51 ist an ihrem hinteren Ende mit einer Lasche 52 versehen, in der sich eine Durchgangsbohrung 53 befindet. Durch diese Durchgangsbohrung 53 ragt der Schwenkzapfen 39 hindurch, der auch durch die Durchgangsbohrung 38 des Zugelements 37 hindurchläuft. Wird also das Zugelement 37 in Zangenlängsrichtung verschoben, so wird gleichzeitig damit auch die Abisolierklaue 51 In Zangenlängsrichtung verschoben. Dabei erfolgt eine Relativverschiebung zwischen Abisolierklaue 51 und beweglichem Klemmbacken 4. Am vorderen Ende weist die Abisolierklaue 51 eine geeignet ausgebildete Schneidkante 54 auf, die beim Schließen des Zangenmauls 29 in die Isolation eines im Zangenmaul eingeklemmten Leiters 36 eindringt. Wird das Zangenmaul 29 durch Verschwenkung des Klemmbackens 4 geschlossen, so wird durch Führung des Klemmbackens 4 auch die Abisolierklaue 51 in Richtung des Leiters 36 bewegt. Erst danach erfolgt die Längsverschiebung der Isolierklaue 51, was später noch genauer beschrieben wird.

Die Schneidkante 54 kann beispielsweise durch Schneidspitzen 55 einer Mehrzahl von Lamellen 56 gebildet sein, die alle in gleicher Weise ausgebildet und um eine Schwenkachse 57 schwenkbar gelagert sind, die an den Seitenwänden der Abisolierklaue 51 befestigt ist. Dies ist am besten in Fig. 10 zu erkennen. Unterhalb der freien Lamellenenden kann sich eine elastische Einrichtung 58 befinden, beispielsweise ein elastisches Kissen, um eine Nachgiebigkeit der Lamellen 56 zu ermöglichen. Die elastische Einrichtung 58 bzw. das Kissen stützt sich dabei an einem Anschlag 59 ab. Wird infolge des Eindringens der Schneidspitzen 55 in die Isolation des abzuisolierenden Leiters eine Kraft auf die Lamellen 56 ausgeübt, so können diese mehr oder weniger weit im Uhrzeigersinn um die Schwenkachse 57 verstellt werden, wobei die elastische Einrichtung 58 an der den Schneidspitzen 55 abgewandten Rückseite der Lamellen 56 komprimiert wird.

Nachfolgend wird der Aufbau des unteren Klemmbackens 28 im einzelnen beschrieben.

Wie bereits erwähnt, gehören zu dem unteren Klemmbacken 28 die feststehenden Backenwände 30, 31 mit ihren oberen Anschlagflächen 32 und 33. Zwischen diesen beiden Backenwänden 30 und 31 sind weitere folgende Einrichtungen vorhanden: eine Lamellenkassette 59, ein Klemmarm 60, eine Blattfeder 61 und Führungsbahnen 62 für die Lamellenkassette 59.

Wie am besten in Fig. 2 zu erkennen ist, wird die Lamellenkassette 59 auf den Führungsbahnen 62 geführt, von denen in Fig. 2 nur eine zu erkennen ist. Tatsächlich sind zwei Führungsbahnen 62 an beiden Gehäuseseitenwänden des Zangengehäuses 2 vorhanden und horizontal ausgerichtet. Auf diesen Führungsbahnen 62 kann dann die Lamellenkassette 59 aufliegen und entsprechend in Zangenlängsrichtung vor- und zurückbewegt werden. Eine seitliche Führung der Lamellenkassette 59 kann ebenfalls über die Gehäuseseitenwände des Zangengehäuses 2 erfolgen.

Der Antrieb für die Vor- und Zurückbewegung der Lamellenkassette 59 erfolgt über eine Kopplung der Lamellenkassette 59 mit dem Zugelement 37. Hierzu weist die Lamellenkassette 59 einen einstückig mit ihr verbundenen Flansch 63 mit einer Durchgangsbohrung 64 auf, durch den ebenfalls der bereits schon erwähnte Schwenkzapfen 39 hindurchgreift. Um diesen Schwenkzapfen 39 sind somit das Zugelement 37, die Lamellenkassette 59 über den Flansch 63 und die Abisolierklaue 51 über die Lasche 52 schwenkbar gelagert.

Die Lamellenkassette 59 wird bei ihrer Vor- und Zurückbewegung auf den Führungsbahnen 62 gegen diese Führungsbahnen 62 gedrückt, und zwar mit Hilfe einer Druckfeder 65, die im Zangenmaul 29 angeordnet ist. Das obere Ende der Druckfeder 65 stützt sich in einer Aufnahme an der unteren Seite der Abisolierklaue ab, während sich das untere Ende der Druckfeder 65 auf einem Einstellelement 66 abstützt, das auf die obere Seite der Lamellenkassette 59 aufgesteckt ist. Dieses Einstellelement 66 ist in Längsrichtung der Lamellenkassette 59 verschiebbar, um zu bestimmen, wie weit das Ende eines Leiters in das Zangenmaul 29 eingeführt werden kann. Durch Positionierung des Einstellelements 66 in Zangenlängsrichtung läßt sich somit die Länge der abzuziehenden Leiterisoltion vorgeben. Dieses Einstellelement 66 dient als Anschlag für das Leiterende.

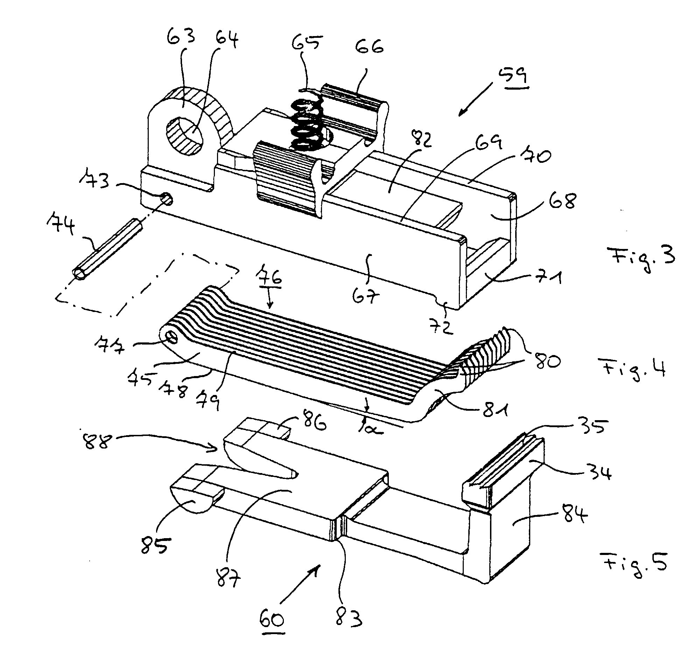

Der Aufbau der Lamellenkassette 59 ist am besten in Fig. 3 zu erkennen.

Gemäß Fig. 3 ist die Lamellenkassette 59 im wesentlichen hohlquaderförmig ausgebildet und weist zwei Seitenwände 67 und 68 auf. Diese Seitenwände 67 und 68 sind oben mit Führungsflächen 69, 70 versehen, auf denen das Einstellelement 66 ruht und in Kassettenlängsrichtung verschoben werden kann. Die den Führungsflächen 69, 70 gegenüberliegenden unteren Flächen der Seitenwände 67 und 68 liegen auf den Führungsbahnen 62 auf, wie bereits erwähnt. Am vorderen Ende rechts in Fig. 3 weist die Lamellenkassette 59 einen unten liegenden Quersteg 71 auf, über den die Seitenwände 67 und 68 verbunden bzw. stabilisiert sind. Sie weisen im Bereich des Querstegs 71 nach unten gerichtete Ansätze 72 auf, durch die die Verschiebung der Lamellenkassette 59 in Richtung zum hinteren Zangenende hin begrenzt wird. Hierbei schlagen die nach hinten weisenden Kanten der Ansätze 72 gegen vordere Anschlagflächen im Bereich der Führungsbahnen 62. Am hinteren Ende links in Fig. 3 ist die Lamellenkassette 59 mit dem bereits erwähnten Flansch 63 einstückig verbunden, der die Durchgangsbohrung 64 für den Schwenkzapfen 39 aufweist. Die Seitenwände 67 und 68 liegen parallel zueinander, während die Zentralachse der Durchgangsbohrung 64 senkrecht dazu läuft.

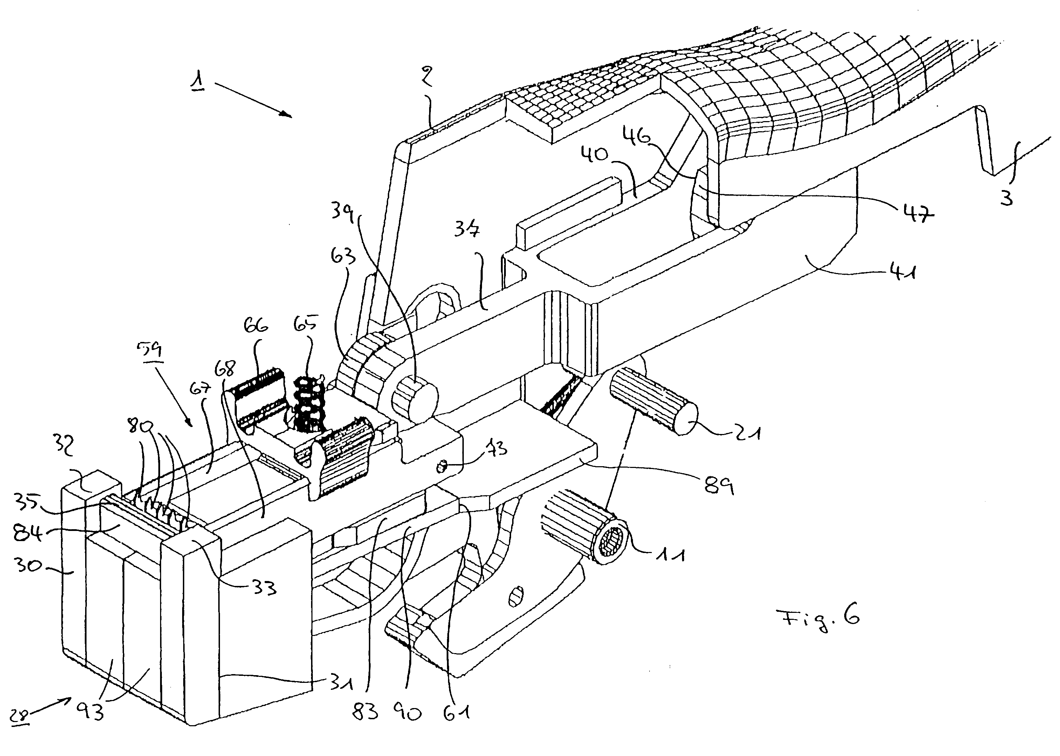

Parallel zur Durchgangsbohrung 64 sind im hinteren und in Fig. 3 liegenden Bereich der Lamellenkassette 59 weitere Durchgangsbohrungen 73 in den Seitenwänden 67 und 68 vorhanden. Diese Durchgangsbohrungen 73 nehmen eine Achse 74 auf, auf der mehrere bzw. viele Lamellen 75 schwenkbar gelagert sind. Diese Lamellen 75 sind relativ dünn und liegen in Vertikalausrichtung dicht nebeneinander. Auf diese Weise wird ein Lamellenpaket 76 erhalten, das in Fig. 4 zu erkennen ist. Die in Fig. 4 links bzw. hinten liegenden Enden der Lamellen 75 sind jeweils mit einer Durchgangsbohrung 77 versehen, durch die die Achse 74 hindurchläuft. Sämtliche Lamellen 75 sind somit um die Achse 74 frei schwenkbar. Da die Achse 74 zwischen den Seitenwänden 67 und 68 gehalten ist, kommt das Lamellenpaket 76 im montierten Zustand innerhalb der Lamellenkassette 59 sowie in deren unterem Bereich zu liegen.

Die Lamellen 75 selbst sind flachstangenförmig ausgebildet, wobei sie ausgehend von den Durchgangsbohrungen 77 in Richtung zum vorderen Ende zunächst eine konstante Höhe aufweisen. Eine untere Lamellenfläche 78 verläuft somit in diesem ersten Bereich parallel zu einer oberen Lamellenfläche 79. Im weiteren Verlauf nach vorn bzw. rechts in Fig. 4 knickt die untere Lamellenfläche 78 etwa im mittleren Lamellenbereich nach oben ab und verläuft jetzt unter einem kleinen Winkel α relativ zur oberen Lamellenfläche 79. Mit anderen Wort verringert sich jetzt die Höhe der Lamelle in Richtung zu ihrem vorderen Ende. Im vorderen Bereich ist dann jede Lamelle 75 schräg nach oben abgewinkelt, also in Richtung zu den Flächen 69 und 70, wobei an den dann erhaltenen freien Lamellenspitzen Schneidkanten 80 vorhanden sind. Diese Schneidkanten 80 liegen also ebenfalls zwischen den Seiten 67 und 68 sowie im vorderen Bereich der Lamellenkassette 59, wobei unterhalb der Schneidkanten 80 der Quersteg 71 zu liegen kommt. Dieser Quersteg 71 wird beim Betrieb der Zange 1 jedoch niemals von den Lamellen 75 bzw. den nach oben abgeknickten Lamellenabschnitten 81 berührt.

Die Lamellen 75 selbst, können aus unelastischem oder elastischem Material bestehen, beispielsweise aus Stahl oder dergleichen. Sie sind nach Einbau in die Lamellenkassette 59 von unten frei zugänglich und lediglich im oberen Bereich aus Sicherheitsgründen noch durch eine Querwand 82 abgedeckt, die jedoch nicht bis zum vorderen Ende der Lamellenkassette 59 reicht, so daß die Schneidkanten 80 von oben frei zugänglich sind. Die Querwand 82 liegt darüber hinaus in einer solchen Tiefe, daß sich der Leiter 36 von oben noch hinreichend weit in die Lamellenkassette 59 hinein bewegen läßt und durch die Schneidkanten 80 beaufschlagt werden kann.

Unterhalb der Lamellenkassette 59 kommt der bereits erwähnte Klemmarm 60 zu liegen. Dieser Klemmarm 60 ist L-förmig ausgebildet und weist einen langen und horizontal liegenden Schenkel 83 sowie einen kurzen und vertikal stehenden Schenkel 84 auf. Der kurze und vertikal stehende Schenkel 84 ist an seinem freien und oberen Ende mit dem Klemmelement 34 versehen, das oben die Klemmfläche 35 aufweist. Dabei sind beide Schenkel 83 und 84 in diesem Ausführungsbeispiel starr miteinander verbunden. Das freie Ende des langen Schenkels 83 weist andererseits im hinteren Bereich zwei einander gegenüberliegende und halbkreisförmig ausgebildete Lageransätze 85 und 86 auf. Mit diesen Lageransätzen 85 und 86 liegt der Klemmarm 60 in Lagerschalen, die sich innen an den Seitenwänden des Zangengehäuses 2 befinden. In Fig. 2 ist der Lageransatz 86 zu erkennen. Die Ausrichtung des Klemmarms 60 in der Zange ist daher so, daß dieser unterhalb der Lamellenkassette 59 liegt und diese praktisch aufnimmt. Dabei liegt das vordere Ende der Lamellenkassette 59 bzw. der Quersteg 71 an der inneren Fläche des kurzen Schenkels 84 des Klemmarms 60 an, während das Lamellenpaket 76 auf der Innenfläche 87 des langen Schenkels 83 des Klemmarms 60 liegt.

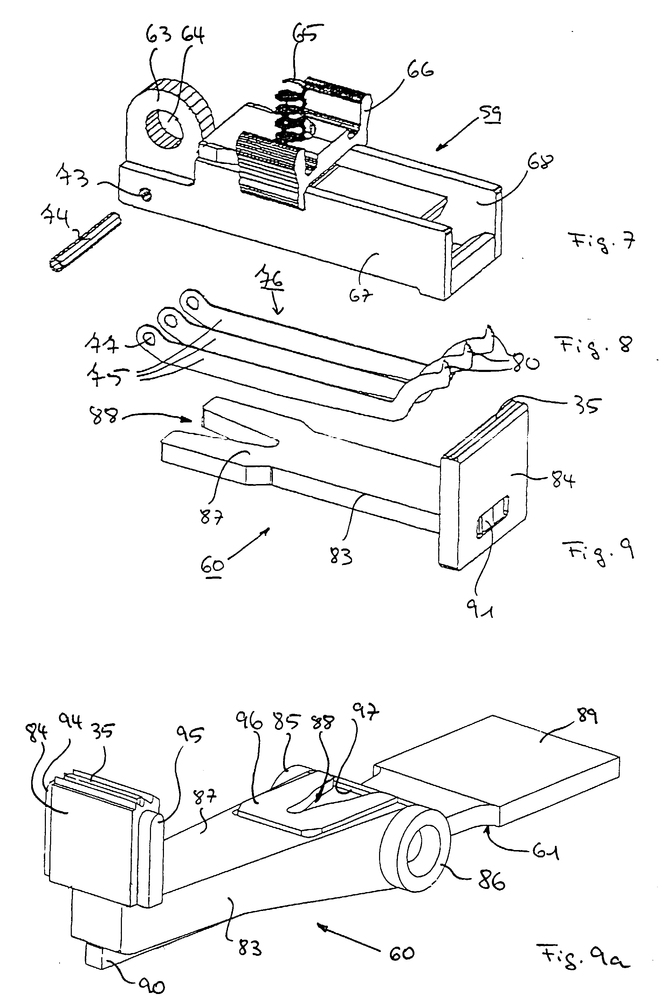

Der Klemmarm 60, dessen Aufbau in Fig. 5 detailliert gezeigt ist, weist im Bereich des langen Schenkels 83 eine V-förmige Ausnehmung 88 auf. Diese V-förmige Ausnehmung 88 ragt von der freien Stirnseite des langen Schenkels 83 in diesen Schenkel hinein und verjüngt sich in Richtung zum kurzen Schenkel 84 gesehen, ohne diesen jedoch zu erreichen. In senkrechter Richtung zur Innenfläche 87 gesehen läuft die Ausnehmung 88 aber durch den gesamten Schenkel 83 hindurch. Die genauere Form des V-förmigen Verlaufs wird durch die Form der Leiter bestimmt, die abisoliert werden sollen. Hierbei sind gewisse Spielräume je nach Leiterquerschnittsform möglich. Je nachdem, ob die Leiter dünner oder dicker sind, ist die V-förmige Ausnehmung 88 schlanker oder breiter. Auch Spezialausführungen, angepaßt an besondere Leiterquerschnittsformen, sind denkbar.

Im Ruhezustand der Zange, also bei vollständig geöffnetem Zangenmaul 29, wird der Klemmarm 60 in einer solchen Position gehalten, daß die Innenfläche 87 parallel zu den unteren Lamellenflächen 78 liegt, wobei diese unteren Lamellenflächen 78 auf der Innenfläche 87 ruhen. Dieser Zustand ist in den Fig. 1 und 2 gezeigt. Die V-förmige Ausnehmung 88 hat jetzt noch keinen Einfluß auf die Relativstellung der Lamellen 75 untereinander. Erst wenn beim Schließen des Zangenmauls 29 der Klemmarm 60 um die Lageransätze 85 und 86 im Uhrzeigersinn in Fig. 5 verschwenkt wird, da er jetzt infolge des im Zangenmaul vorhandenen Leiters 30 nach unten weggedrückt wird, wirkt sich das Vorhandensein der V-förmigen Ausnehmung 88 auf die Relativstellung der Lamellen 75 zueinander aus, die sich immer frei nach unten um die Achse 74 bewegen können. Dabei wird infolge des Randes der V-förmigen Ausnehmung 88 im Bereich der Innenfläche 87 verhindert, daß sich die außen liegenden Lamellen 75 weit nach unten verschwenken können, während dies in nicht so starkem Maße für die mittleren Lamellen gilt. Sie lassen sich weiter nach unten verschwenken. Insgesamt werden somit die Lamellen 75 durch die Wirkung des oberen Randes der V-förmigen Ausnehmung 88 mit einem gewünschten Kräfteprofil entsprechend der Form der V-förmigen Ausnehmung 88 in die Leiterisolation hineingedrückt, was zu einem besseren bzw. saubererem Abisolierergebnis führt.

Dabei kann die Position des Klemmarms 60 in Längsrichtung des langen Schenkels 83 auch noch voreingestellt werden, und zwar durch mehrere und hintereinanderliegende Aufnahmen für die Lageransätze 85 und 86, um dadurch Andruckkräfte generell vorgeben zu können.

Sobald das Zangenmaul 29 geschlossen und die Isolation des im Zangenmaul 29 eingeklemmten Leiters durchtrennt ist, wird die Lamellenkassette 59 in Richtung zum hinteren Zangenende bewegt und mit ihr das Lamellenpaket 76. Der verschwenkte Klemmarm 60 behält dabei seine Schwenkposition und bewegt sich auch nicht in Längsrichtung der Zange, so daß das Lamellenpaket 76 über den Rand der V-förmigen Ausnehmung 88 gezogen wird, der sich in der Innenfläche 87 befindet. Solange sich die Höhe der Lamellen 75 nicht ändert, also der Abstand zwischen der unteren Lamellenfläche und der oberen Lamellenfläche 78, 79 konstant bleibt, erfolgt keine weitere Relativverschwenkung der Lamellen 75 untereinander. Gelangt jedoch der unter dem Winkel α abgeschrägte Bereich der unteren Lamellenfläche 78 auf den genannten Rand der V-förmigen Ausnehmung 88, können die einzelnen Lamellen 75 weiter nachgeben bzw. sich nach unten absenken, so daß jetzt die Schneidkanten 80 ein wenig vom metallischen Leiterkern freikommen und diesen nicht mehr zerkratzen können. Die Schneidkanten 80 greifen aber nach wie vor hinter die durchtrennte Leiterisolation, um diese vom Leiterkern abzuziehen. Der Vorgang wird später noch im einzelnen erläutert.

Unterhalb des in Fig. 5 gezeigten Klemmarms 60 ist die Blattfeder 61 angeordnet, wie am besten in Fig. 2 zu erkennen ist. Diese Blattfeder 61 weist ein hinteres breites Ende 89 auf und verjüngt sich in Richtung zum vorderen Zangenende. Mit ihrem hinteren breiten Ende 89 ist sie an den Seitenwänden des Zangengehäuses 2 befestigt. Hierzu können die einander gegenüberliegenden Seitenbereiche des breiten Endes 89 in Seitenwandschlitze des Zangengehäuses 2 fest eingreifen. Der elastische Spitzenbereich 90 der Blattfeder 61 drückt gegen den Boden bzw. langen Schenkel 83 des Klemmarms 60 und hält diesen in Ruhestellung der Zange bei geöffnetem Zangenmaul 29 in Horizontalposition, wie ebenfalls in Fig. 2 zu erkennen ist. Kommt der Leiter 36 auf dem kurzen Schenkel 84 des Klemmarms 60 zu liegen, und wird dieser durch den Leiter 36 um die Lageransätze 86 verschwenkt, so erfolgt diese Verschwenkung gegen die Kraft der Blattfeder 61, die dadurch die nötige Schneidkraft zur Verfügung stellt. Dabei ist die Blattfeder 61 nicht nur für die Erzeugung der Schneidkraft sondern auch für die Bereitstellung der Klemmkraft zum Einklemmen des Leiters 36 zuständig. Es handelt sich hier daher um eine sehr stabile und entsprechend ausgebildete Blattfeder. Sie kann auch durch Federn anderer Art ersetzt werden, die sich innerhalb des unteren Klemmbackens sowie unterhalb des Klemmarms 60 anordnen lassen.

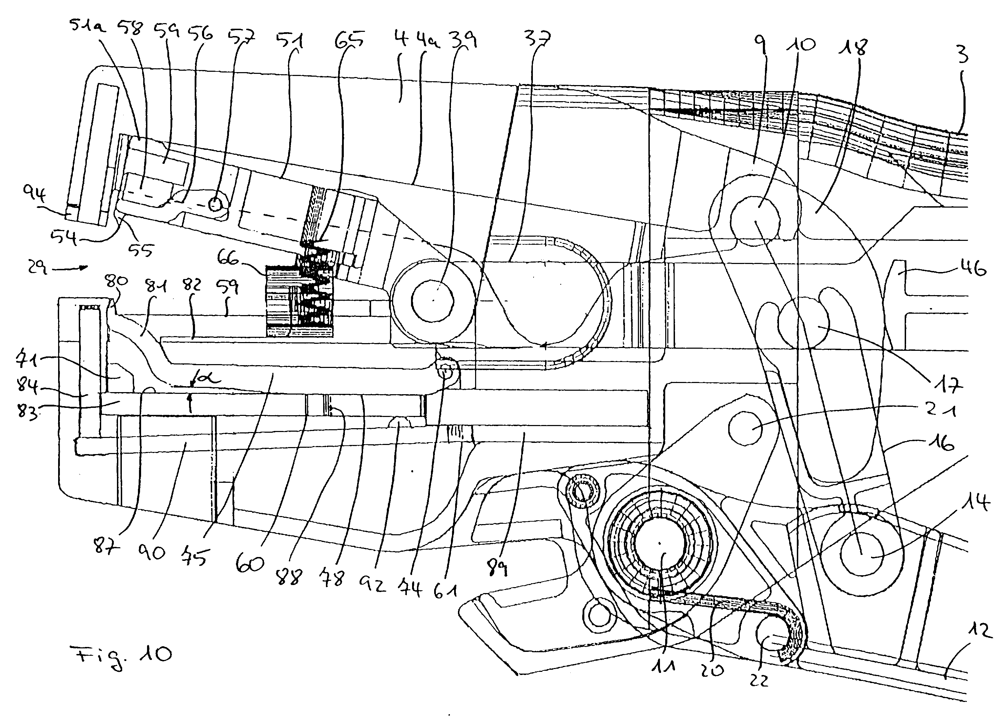

Die Fig. 6 bis 9 zeigen ein zweites Ausführungsbeispiel einer Abisolierzange nach der Erfindung. Gleiche Elemente wie in den Fig. 1 bis 5 sind mit den gleichen Bezugszeichen versehen und werden nicht nochmals beschrieben.

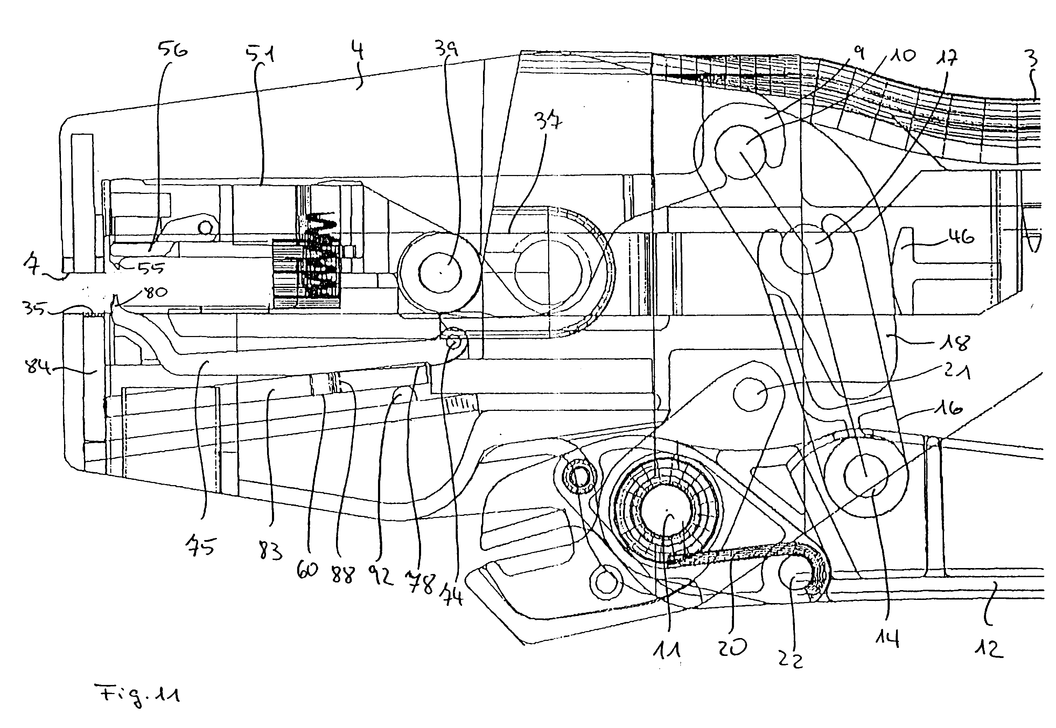

Abweichend vom ersten Ausführungsbeispiel ist der Aufbau des Klemmarms 60 gemäß Fig. 9. Wesentlicher Unterschied ist, daß hier der lange Schenkel 83 und der kurze Schenkel 84 gelenkig miteinander verbunden sind. Beide Schenkel 83, 84 können dazu z.B. mit elastischen Winkeln 91 verbunden sein, die in die jeweiligen Schenkel 83, 84 fest eingefügt sind. Ansonsten weist der lange Schenkel 83 an seiner Innenseite eine durchgehende bzw. ebene Führungsfläche 87 auf. Um zu verhindern, daß sich der Klemmarm 60 beim Abziehen der durchtrennten Leiterisolation vom Leiter in Richtung zum hinteren Zangenende verschiebt, kann am freien stirnseitigen Ende des langen Schenkels 83 ein entsprechender Anschlag vorgesehen sein, der an den Seitenwänden des Zangengehäuses 2 vorhanden ist. Dieser Anschlag käme in Fig. 6 etwa oberhalb des hinteren und breiten Endes 89 der Blattfeder 61 zu liegen. Das hintere und freie Ende des langen Schenkels 83 des Klemmarms 60 nach dem zweiten Ausführungsbeispiel weist auch keine separaten Lageransätze mehr auf, wie dies noch beim ersten Ausführungsbeispiel der Fall ist. Vielmehr kann dieses Ende auf Lageransätzen 92 gelagert sein (siehe Fig. 10), die sich an den Seitenwänden des Lagergehäuses 2 befinden. Die Lageransätze 92 können auch durch eine durchgehende Lagerstange ersetzt werden, wobei in diesem Fall die Lagerstange oberhalb der Blattfeder 61 liegt. In Fig. 10 müßte dann die Blattfeder 61 um die entsprechende Lagerstange herumgeführt sein. Ansonsten ist in Fig. 6 noch zu erkennen, daß der vordere und untere Bereich des unteren Klemmbackens 20 durch weitere Wandelemente 93 abgedeckt sein kann.

Ein drittes Ausführungsbeispiel einer Abisolierzange nach der Erfindung ist in Figur 9a dargestellt. Abweichend vom ersten und zweiten Ausführungsbeispiel ist wiederum der Aufbau des Klemmarms 60. Gleiche Elemente wie in den vorhergehenden Ausführungsbeispielen sind mit den gleichen Bezugszeichen versehen und werden nicht nochmals beschrieben.

Beim dritten Ausführungsbeispiel gemäß Figur 9a befinden sich an beiden Seiten des kurzen Schenkels 84 Führungsansätze 94 und 95, die sich in Vertikalrichtung erstrecken und in Führungsnuten greifen, die sich an gegenüberliegenden Innenseitenflächen des Zangengehäuses befinden. Auch hier ist der kurze Schenkel 84 schwenkbar zum langen Schenkel 83 des Klemmarms 60 gelagert. Das freie Ende des langen Schenkels 83 des Klemmarms 60 ist mit seitlichen Lageransätzen 85, 86 versehen, die in entsprechenden Ausnehmungen in den Seitenflächen des Zangengehäuses liegen. Diese Lageransätze 85, 86 sind hier kreisringförmig ausgebildet und weisen nur einen geringen Verschleiß auf. Sie können einstückig mit dem Klemmarm 60 verbunden sein. Es kann sich hier aber auch um kreisförmige Aufsätze aus verschleißarmem Material handeln, beispielsweise aus hochfestem Metall, die z. B. auf entsprechende zylindrische Ansätze (nicht dargestellt) aufgesteckt werden können, die ihrerseits mit dem Klemmarm 60 einstückig verbunden sind.

Bei diesem Ausführungsbeispiel ist die Lamellenführungseinrichtung als plattenförmiges Teil 96 ausgebildet, das in eine flächige Ausnehmung 97 passend eingelegt werden kann. Diese flächige Ausnehmung 97 befindet sich in der oberen Fläche 87 des Klemmarms 60. Im plattenförmigen Teil 96 ist wiederum die V-förmige Ausnehmung 88 vorhanden, die mit zunehmendem Abstand vom kurzen Schenkel 84 breiter wird. Das plattenförmige Teil 96 ist, wie bereits erwähnt, passend bzw. spielfrei in die flächige Ausnehmung 97 eingesetzt und kann z. B. ebenfalls aus verschleißarmem Material, z. B. aus hochfestem Metall, bestehen.

Nachfolgend wird die Wirkungsweise der Zange unter Bezugnahme auf die Fig. 10 bis 12 näher beschrieben.

In Fig. 10 ist die Zange in Ruhestellung gezeigt, also bei am weitesten geöffnetem Zangenmaul 29. In diesem Zustand werden durch die Feder 65 die Abisolierklaue 51 und die Lamellenkassette 59 auseinandergedrückt, wobei die Lamellenkassette 59 auf die Führungen 62 gepreßt wird. Infolge der Wirkung der elastischen Einrichtung 58 stehen die Schneidspitzen 55 der Lamellen 56 am weitesten vor und ragen in eine stirnseitige Leiteraufnahme 94 des oberen Klemmbackens hinein.

Der lange Schenkel 83 des Klemmarms 60 wird durch die Feder 61 bzw. durch deren elastischen Spitzenbereich 90 in seiner obersten Stellung gehalten, in der er horizontal bzw. parallel zu den Führungsbahnen 62 liegt. Die Lamellen 75 liegen mit ihrer unteren Lamellenfläche 78 auf der planen bzw. horizontalen Innenfläche 87 des langen Schenkels 83 auf und befinden den sich ebenfalls in ihrer Ausgangsstellung, in die Schneidkanten 80 am weitesten nach oben weisen. Die V-förmige Ausnehmung 88 im langen Schenkel 83 des Klemmarms 16 bewirkt jetzt noch keine Relativverschwenkung der einzelnen Lamellen 75 zueinander. In Fig. 10 sei angenommen, daß nur die mittlere Lamelle 75 des Lamellenpakets 76 zu erkennen ist. Wie gezeigt, ist die untere Lamellenfläche 78 in Richtung zum vorderen Ende der Zange etwa ab dem mittleren Lamellenbereich leicht nach oben geführt, bevor die Lamelle in den Lamellenabschnitt 81 übergeht. Zwischen diesem abgewinkelten Lamellenflächenbereich und der Innenfläche 87 ist dann der Winkel α vorhanden, der bereits in Fig. 4 erläutert wurde. Es sei noch darauf hingewiesen, daß das spitze Ende der V-förmigen Ausnehmung 88 in den Fig. 10 bis 12 mit einer gestrichelten Linie eingezeichnet ist, die auch das Auflager für die mittlere Lamelle 75 markiert.

Werden jetzt die Handgriffe 3 und 12 zusammengedrückt, so wird über das bereits zuvor erwähnte Kniehebelgelenk der obere Klemmbacken 4 in den Fig. 10 bis 12 entgegen dem Uhrzeigersinn um den Schwenkzapfen 39 herumgedreht. Dabei bewirkt das Schiebeglied 18 zunächst noch keine oder eine nur sehr geringe Verschiebung des Stellkopfes 46 zum hinteren Zangenende hin. Bei noch nicht vollständig zusammengeführten Handgriffen 3 und 12 ist jetzt das Zangenmaul 29 geschlossen und die Schneidspitzen 55 sowie die Schneidkanten 80 dringen in den (nicht dargestellten) und im Zangenmaul eingklemmten Leiter ein. In diesem Zustand schlägt die Klemmfläche 7 in Fig. 1 gegen die oberen Anschlagflächen 32, während der Leiter 36, der auf der Klemmfläche 35 des Klemmelements 34 liegt, durch die Klemmfläche 7 nach unten gedrückt wird, und zwar entgegen der Kraft der Feder 61. Der Klemmarm 60 weicht dabei entsprechend nach unten aus.

Infolge der im Zangenmaul erzeugten Klemmkraft wird also der kurze Schenkel 84 des Klemmarms 60 entgegen der Kraft der Feder 61 und um den Lageransatz 92 herum verschwenkt, so daß jetzt die V-förmige Ausnehmung 88 für eine Relativverschiebung der einzelnen Lamellen 75 zueinander sorgen kann. Die mittelere Lamelle kann am stärksten nach unten ausweichen, da für sie das Auflager, gebildet durch den oberen Rand der V-förmigen Ausnehmung 88, am weitesten vorn liegt. Die seitlichen Lamellen 75 des Lamellenpakets 76 können aber infolge der V-förmigen Ausnehmung 88 nicht so stark nach unten ausweichen, so daß sie besser in die seitlichen Leiterisolationsbereiche eindringen können. Infolge der V-förmigen Ausnehmung 88 legen sich daher die Schneidkanten 80 der Lamellen 75 besser um die Kontur des Leiters 36 herum und dringen insbesondere im seitlichen Bereich stärker in die Leiterisolation ein, da die seitlichen bzw. außen liegenden Lamellen 75 nicht mehr so stark nachgeben können. Daher wird ein besseres bzw. saubereres Abisolierergebnis erzielt.

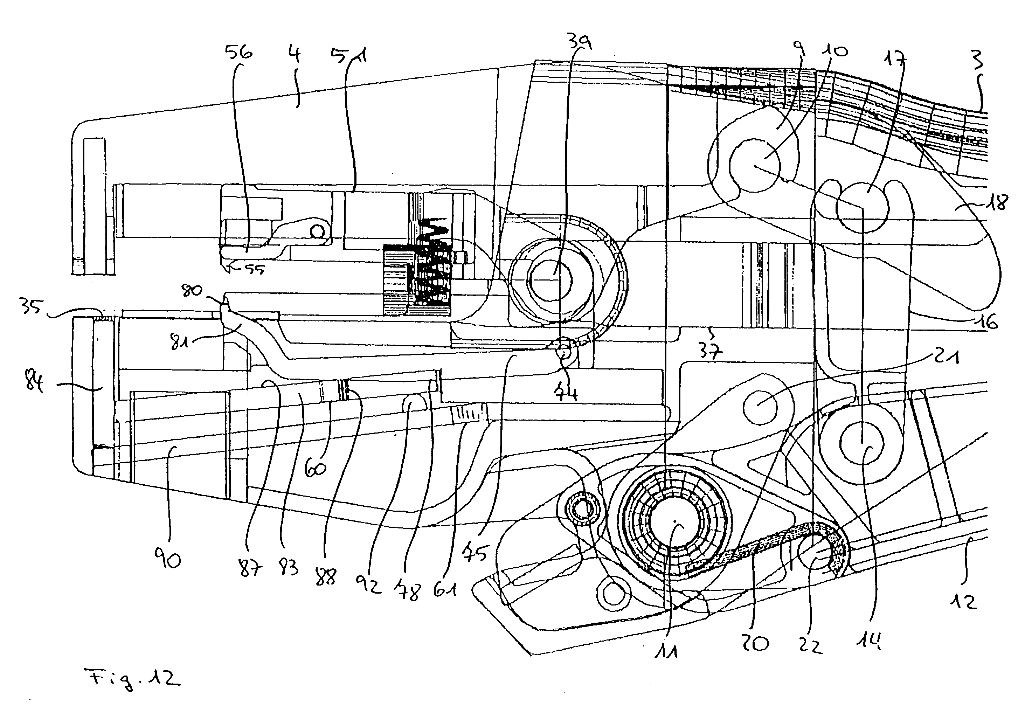

In Fig. 11 ist deutlich zu erkennen, daß die untere Lamellenfläche 78 zum hinteren Zangenende hin immer stärker in die V-förmige Ausnehmung 88 hineinragt. Dieser Zustand markiert etwa den Zustand der größten Klemmkraft bzw. Schneidkraft im Zangenmaul.

Werden jetzt gemäß Fig. 12 die Handgriffe 3 und 12 vollständig zusammengedrückt, so schwenkt das hintere freie Ende des Schiebegliedes 18, das den Schwenkzapfen 17 in Richtung zum Schwenkzapfen 14 überragt, am weitesten in Richtung zum hinteren Zangenende aus und drückt somit den Stellkopf 46 in seine hinterste Endstellung. Dies führt dazu, daß sich auch die Lamellenkassette 59 in ihre hinterste Endstellung bewegt und mit ihr die Abisolierklaue 51. Der Klemmarm 60 verbleibt in seiner verschwenkten Stellung, jedoch gleiten jetzt die Lamellen 75 mit ihrer unteren Lamellenfläche 78 über den durch die V-förmige Ausnehmung 88 definierten Rand in der Fläche 87. Dabei kommt im Verlauf dieser nach hinten führenden Bewegung auch der um den Winkel α abgebogene Bereich der unteren Lamellenfläche 78 auf dem genannten Rand (Auflager) zu liegen, so daß jetzt die mittlere Lamelle 75 des Lamellenpaketes 76 und die zu ihr benachbart liegenden Lamellen 75 abgesenkt werden. Dies führt dazu, daß sich die Schneidkanten 80 vom Kern des Leiters 36 ein wenig entfernen, ohne jedoch außer Eingriff mit der Isolation zu gelangen. Die Absenkung für die außen liegenden Lamellen 75 des Lamellenpaketes 75 ist nicht ganz so stark, ist andererseits aber auch nicht erforderlich, da hier die Lamellen 75 seitlich am Leiterkern vorbeigehen.

Bei der nach hinten führenden Bewegung der Lamellenkassette 59 wird auch das obere Abisolierorgan 51 nach hinten bewegt, wobei es über einen oberen und vorn liegenden Ansatz 51 a an einer innen liegenden Führungsfläche 4a des oberen Arbeitsbackens 4 abgestützt wird. Bei Entlastung der Handgriffe 3 und 12 werden diese durch die Feder 20 wieder gespreizt, während gleichzeitig die Druckfeder 50 das Zugelement 37 wieder nach vorn schiebt und mit ihm die Abisolierklaue 51 und die Lamellenkassette 59. Das Zangenmaul 59 wird außerdem durch die Feder 65 wieder geöffent und die Feder 61 drückt den Klemmarm 60 in seine Ausgangsstellung zurück.

## Patentansprüche

1. Vorrichtung zum Abisolieren von Leiterenden, mit zwei in einem durch Klemmbacken (4, 60) gebildeten Maul angeordneten Abisolierorganen (51, 76), die in Maullängsrichtung verschiebbar sind, und von denen wenigstens eines ein Paket (76) aus nebeneinander liegenden und quer zur Maullängsrichtung bewegbaren Lamellen (75) mit Schneidkanten (80) aufweist, welche beim Schließen des Mauls (29) in eine Isolation eines durch die Klemmbacken (4, 60) gehaltenen Leiters (36) eindringen, **dadurch gekennzeichnet,** daß an der Rückseite des Lamellenpakets (76) eine an das Profil des Leiters (36) angepaßte und die Lamellenquerbewegung entsprechend bestimmende Lamellenführungseinrichtung (83, 87, 88) liegt.

2. Vorrichtung nach Anspruch 1, **dadurch gekennzeichnet,** daß die Lamellenführungseinrichtung verschwenkbar gelagert ist.

3. Vorrichtung nach Anspruch 2, **dadurch gekennzeichnet,** daß die Lamellenführungseinrichtung (83, 87, 88) Teil eines Klemmbackens (60) ist.

4. Vorrichtung nach Anspruch 3, **dadurch gekennzeichnet,** daß die Lamellenführungseinrichtung (83, 87,88) einstückig mit dem Klemmbacken (60) verbunden ist.

5. Vorrichtung nach Anspruch 3 oder 4, **dadurch gekennzeichnet,** daß der Klemmbacken (60) gelenkig ausgebildet ist.

6. Vorrichtung nach Anspruch 3, 4 oder 5, **dadurch gekennzeichnet,** daß der Klemmbacken (60) in Maullängsrichtung an verschiedenen Positionen positionierbar ist.

7. Vorrichtung nach einem der Ansprüche 3 bis 6, **dadurch gekennzeichnet,** daß der Klemmbacken im Bereich der Lamellenführungseinrichtung schwenkbar gelagert ist.

8. Vorrichtung nach einem der Ansprüche 1 bis 7, **dadurch gekennzeichnet,** daß das Lamellenpaket (76) in Maullängsrichtung gleitend auf der Lamellenführungseinrichtung (83, 87, 88) verschiebbar und der Lamellenboden (78) des horizontalen Lamellenarms im vorderen Lamellenbereich zur Schneidkante (80) hin leicht abgewinkelt ist.

9. Vorrichtung nach Anspruch 8, **dadurch gekennzeichnet,** daß das Lamellenpaket (76) in einer Lamellenkassette (59) schwenkbar gelagert ist, die mit einer in Maullängsrichtung verschiebbaren Zugstange (37) verbunden ist.

10. Vorrichtung nach einem der Ansprüche 3 bis 9, **dadurch gekennzeichnet,** daß an der Rückseite des Klemmbackens (60) eine diesen in Richtung zum Maul (29) drückende Feder (61) angeordnet ist.

11. Vorrichtung nach Anspruch 10, **dadurch gekennzeichnet,** daß die Feder (61) eine in Maullängsrichtung verlaufende und am hinteren Maulende gelagerte Blattfeder ist.

12. Vorrichtung nach einem der Ansprüche 3 bis 11, **dadurch gekennzeichnet,** daß der die Lamellenführungseinrichtung (83, 87, 88) aufweisende Klemmbacken (60) zwischen feststehenden Gehäusetellen (30, 31) angeordnet ist, gegen die der andere Klemmbacken (4) beim Schließen des Mauls (29) gefahren wird.

13. Vorrichtung nach einem der Ansprüche 9 bis 12, **dadurch gekennzeichnet,** daß das andere (51) der beiden Abisolierorgane (51, 76) ebenfalls mit der Zugstange (37) gekoppelt ist.

14. Vorrichtung nach Anspruch 13, **dadurch gekennzeichnet,** daß zwischen diesem anderen Abisolierorgan (51) und der Lamellenkassette (59) eine Druckfeder (65) vorhanden ist, die die Lamellenkassette (59) gegen Führungsflächen (62) drückt, auf denen sie verschiebbar ist.

15. Vorrichtung nach einem der Ansprüche 1 bis 14, **dadurch gekennzeichnet,** daß sie als eine zwei Handgriffe (3, 12) aufweisende Zange (1) ausgebildet ist, durch die beim Zusammenführen der Handgriffe (3, 12) das Maul (29) geschlossen und die Zugstange (37) zum hinteren Zangenende geführt wird, und umgekehrt.

16. Vorrichtung nach einem der Ansprüche 2 bis 15, **dadurch gekennzeichnet,** daß die Lamellenführungseinrichtung als Einlegeteil (96) ausgebildet ist.

17. Vorrichtung nach Anspruch 16, **dadurch gekennzeichnet,** daß das Einlegeteil (96) als Platte mit randseitiger, V-förmiger Ausnehmung (88) ausgebildet ist.

18. Vorrichtung nach Anspruch 17, **dadurch gekennzeichnet,** daß die Platte in eine Ausnehmung (97) eines schwenkbaren Klemmbackenarms (83) einlegbar ist.

## Claims

1. Device for stripping conductor ends, having two stripping devices (51, 76), which are arranged in a mouth formed by clamping jaws (4, 60) and can be displaced in the mouth longitudinal direction, and of which at least one has a stack (76) of laminates (75) which are located side by side, can be moved transversely with respect to the mouth longitudinal direction and which has cutting edges (80) which penetrate into insulation of a conductor (36), which is held by the clamping jaws (4, 60), when the mouth (29) is closed, **characterized in that** a laminate guidance device (83, 87, 86), which is matched to the profile of the conductor (36) and determines the laminate transverse movement in a corresponding manner, is located on the rear side of the laminate stack (76).

2. Device according to Claim 1, **characterized in that** the laminate guidance device is mounted such that it can pivot.

3. Device according to Claim 2, **characterized in that** the laminate guidance device (83, 87, 88) is part of a clamping jaw (60).

4. Device according to Claim 3, **characterized in that** the laminate guidance device (83, 87, 88) is integrally connected to the clamping jaw (60).

5. Device according to Claim 3 or 4, **characterized in that** the clamping jaw (60) is constructed in an articulated manner.

6. Device according to Claim 3, 4 or 5, **characterized in that** the clamping jaw (60) can be positioned at various positions in the mouth longitudinal direction.

7. Device according to one of Claims 3 to 6, **characterized in that** the clamping jaw is mounted in the region of the laminate guidance device such that it can pivot.

8. Device according to one of Claims 1 to 7, **characterized in that** the laminate stack (76) can be displaced in a sliding manner in the mouth longitudinal direction on the laminate guidance device (83, 87, 88), and the laminate base (78) of the horizontal laminate arm is slightly bent towards the cutting edge (80) in the front laminate region.

9. Device according to Claim 8, **characterized in that** the lamimate stack (76) is mounted in a laminate cassette (59) such that it can pivot, which laminate cassette (59) is connected to a tie rod (37) which can be displaced in the mouth longitudinal direction.

10. Device according to one of Claims 3 to 9, **characterized in that** a spring (61), which presses the clamping jaw (60) in the direction of the mouth (29), is arranged on the rear side of the clamping jaw (60).

11. Device according to Claim 10, **characterized in that** the spring (61) is a leaf spring which runs in the mouth longitudinal direction and is mounted at the rear mouth end.

12. Device according to one of Claims 3 to 11, **characterized in that** the clamping jaw (60) which has the laminate guidance device (83, 87, 88) is arranged between stationary housing parts (30, 31) against which the other clamping jaw (4) is moved during closure of the mouth (29).

13. Device according to one of Claims 9 to 12, **characterized in that** the other (51) of the two stripping devices (51, 76) is likewise coupled to the tie rod (37).

14. Device according to Claim 13, **characterized in that** a compression spring (65) is provided between this other stripping device (51) and the laminate cassette (59) and presses the laminate cassette (59) against guide surfaces (62) onto which it can be displaced.

15. Device according to one of Claims 1 to 14, **characterized in that** it is designed as pliers (1) which have two handles (3, 12), by means of which pliers (1) the mouth (29) is closed when the handles (3, 12) are moved together and the tie rod (37) is guided to the rear end of the pliers, and vice versa.

16. Device according to one of Claims 2 to 15, **characterized in that** the laminate guidance device is designed as an insertion part (96).

17. Device according to Claim 16, **characterized in that** the insertion part (96) is designed as a plate having a V-shaped recess (88) at the edge.

18. Device according to Claim 17, **characterized in that** the plate can be inserted into a recess (97) in a clamping jaw arm (83) which can pivot.

## Revendications

1. Dispositif pour dénuder des extrémités de conducteur, comportant deux organes de dénudage (51, 76), disposés dans une bouche formée par des mâchoires de serrage (4, 60) et déplaçables dans la direction longitudinale de la bouche, et dont au moins l'un présente un paquet (76) constitué de lamelles (76) situées les unes à côté des autres et déplaçables transversalement par rapport à la direction longitudinale de la bouche, lamelles dotées d'arêtes de coupe (80) qui pénètrent, lors de la fermeture de la bouche (29), dans une isolation d'un conducteur (36) maintenu au moyen des mâchoires de serrage (4, 60), caractérisé en ce que sur la face arrière du paquet de lamelles (76) est disposé un organe de guidage de lamelles (83, 87, 88) adapté au profil du conducteur (36) et déterminant de manière correspondante le déplacement transversal des lamelles.

2. Dispositif selon la revendication 1, caractérisé en ce que l'organe de guidage de lamelles est monté pivotant.

3. Dispositif selon la revendication 2, caractérisé en ce que l'organe de guidage de lamelles (83, 87, 88) fait partie d'une mâchoire de serrage (60).

4. Dispositif selon la revendication 3, caractérisé en ce que l'organe de guidage de lamelles (83, 87, 88) est relié d'une seule pièce à la mâchoire de serrage (60).

5. Dispositif selon la revendication 3 ou 4, caractérisé en ce que la mâchoire de serrage (60) est réalisée articulée.

6. Dispositif selon la revendication 3, 4 ou 5, caractérisé en ce que la mâchoire de serrage (60) est susceptible d'être positionnée en différentes positions dans la direction longitudinale de la bouche.

7. Dispositif selon l'une des revendications 3 à 6, caractérisé en ce que la mâchoire de serrage est montée pivotante dans la zone de l'organe de guidage de lamelles.

8. Dispositif selon l'une des revendications 1 à 7, caractérisé en ce que le paquet de lamelles (76) est déplaçable dans la direction longitudinale de la bouche, en glissant sur l'organe de guidage de lamelles (83, 87, 88) et en ce que le fond de lamelles (78) du bras horizontal à lamelles est légèrement coudé en s'éloignant de l'arête de coupe (80), dans la zone avant des lamelles.

9. Dispositif selon la revendication 8, caractérisé en ce que le paquet de lamelles (76) est monté pivotant dans une cassette à lamelles (59), reliée à une barre de traction (37) déplaçable dans la direction longitudinale de la bouche.

10. Dispositif selon l'une des revendications 3 à 9, caractérisé en ce que sur la face arrière de la mâchoire de serrage (60) est disposé un ressort (61) pressant dans la direction de la bouche (29).

11. Dispositif selon la revendication 10, caractérisé en ce que le ressort (61) est un ressort à lame s'étendant dans la direction longitudinale de la bouche et monté à l'extrémité arrière de cette bouche.

12. Dispositif selon l'une des revendications 3 à 11, caractérisé en ce que la mâchoire de serrage (60) présentant l'organe de guidage de lamelles (83, 87, 88) est disposée entre parties de boîtier (30, 31) fixes, contre lesquelles l'autre mâchoire de serrage (4) est déplacée lors de la fermeture de la bouche (29).

13. Dispositif selon l'une des revendications 9 à 12, caractérisé en ce que l'autre (51) des deux organes de dénudage (51, 76) est également couplé à la tige de traction (37).

14. Dispositif selon la revendication 13, caractérisé en ce qu'entre cet autre organe de dénudage (51) et la cassette à lamelles (59) est prévu un ressort de compression (65) qui presse la cassette à lamelles (59) contre des surfaces de guidage (52) sur lesquelles elle est déplaçable.

15. Dispositif selon l'une des revendications 1 à 14, caractérisé en ce qu'il est réalisé sous la forme d'une pince (1) présentant deux poignées (3, 12), au moyen desquelles, lors du rapprochement des poignées (3, 12), la bouche (29) est fermée et la tige de traction (37) étant guidée vers l'extrémité arrière de la pince et inversement.

16. Dispositif selon l'une des revendications 2 à 15, caractérisé en ce que l'organe de guidage de lamelles est réalisé sous la forme d'une pièce rapportée (96).

17. Dispositif selon la revendication 16, caractérisé en ce que la pièce rapportée (96) est réalisée sous la forme de plaque ayant en bordure un évidement (88) en forme de V.

18. Dispositif selon la revendication 17, caractérisé en ce que la plaque est susceptible d'être insérée dans un évidement (97) appartenant à un bras (83), susceptible de pivoter, de la mâchoire de serrage.
